(19) Europäisches Patentamt
European Patent Office
Office européen des brevets

(11) **EP 2 509 372 A1**

(12) **EUROPEAN PATENT APPLICATION**
published in accordance with Art. 153(4) EPC

(43) Date of publication:
**10.10.2012 Bulletin 2012/41**

(51) Int Cl.:
***H04W 52/22*** *(2009.01)*

(21) Application number: **10834229.6**

(22) Date of filing: **01.12.2010**

(86) International application number:
**PCT/CN2010/079359**

(87) International publication number:
**WO 2011/066796 (09.06.2011 Gazette 2011/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.12.2009  CN 200910224371**

(71) Applicant: **Huawei Technologies Co., Ltd.**
**Guangdong 518129 (CN)**

(72) Inventors:
- **ZHOU, Xun**
  **Shenzhen**
  **Guangdong 518129 (CN)**
- **FENG, Xin**
  **Shenzhen**
  **Guangdong 518129 (CN)**

- **HU, Jun**
  **Shenzhen**
  **Guangdong 518129 (CN)**
- **WANG, Daowei**
  **Shenzhen**
  **Guangdong 518129 (CN)**
- **CHEN, Li**
  **Shenzhen**
  **Guangdong 518129 (CN)**
- **CHEN, Yuntao**
  **Shenzhen**
  **Guangdong 518129 (CN)**

(74) Representative: **Goddar, Heinz J.**
**Boehmert & Boehmert**
**Pettenkoferstrasse 20-22**
**80336 München (DE)**

(54) **CHANNEL POWER BIAS SETTING METHOD, APPARATUS AND BASE STATION**

(57)    Embodiments of the present invention provide a method and an apparatus for setting a channel power offset, and a base station, where the method includes: obtaining a load of a cell; comparing the obtained load of the cell with a preset threshold value, and setting a channel power offset value of a user equipment in the cell according to a comparison result. In the embodiments of the present invention, the channel power offset value may be flexibly set according to a load state of the cell.

| Obtain a load of a cell covered by a base station | 101 |
|---|---|
| Compare the obtained load of the cell covered by the base station with a preset threshold value, and set a channel power offset value of a UE in the cell according to a comparison result | 102 |

FIG. 1

## Description

This application claims priority to Chinese Patent Application No. z910224371.7, filed with the Chinese Patent Office on December 2, 2009, and entitled "METHOD AND APPARATUS FOR SETTING CHANNEL POWER OFFSET, AND BASE STATION", which is incorporated herein by reference in its entirety.

## FIELD OF THE INVENTION

The present invention relates to the field of wireless communications technologies, and in particular, to a channel power offset setting technology.

## BACKGROUND OF THE INVENTION

The long term evolution (Long Term Evolution, abbreviated as LTE) technology is a technology between the third generation (the Third Generation, abbreviated as 3G) mobile communications technology and the fourth generation (the Fourth Generation, abbreviated as 4G) mobile communications technology. A base station of an LTE system is also called an evolved Node B (evolved Node B, abbreviated as eNB). A channel power offset value (may also be indicated as $P_A$) refers to a power offset value between energy per resource element (Energy Per Resource Element, abbreviated as EPRE) of signals, excluding reference signals (Reference Signal, abbreviated as RS), transmitted in a physical downlink shared channel (Physical Downlink Shared CHannel, abbreviated as PDSCH) and EPRE of the reference signals. The power offset value may be a proportional value indicated by a logarithm. However, in the prior art, a value of $P_A$ is preset and cannot be adjusted automatically.

## SUMMARY OF THE INVENTION

Embodiments of the present invention provide a method and an apparatus for setting a channel power offset, and a base station, so as to set a channel power offset according to a load state of a cell.
Specifically, the embodiments of the present invention may be implemented through the following technical solutions:
According to one aspect, a method for setting a channel power offset is provided. The method includes:

obtaining a load of a cell; and
comparing an obtained load of the cell with a preset threshold value, and setting a channel power offset value of a user equipment in the cell according to a comparison result of comparing the obtained load of the cell with a preset threshold value.

An apparatus for setting a channel power offset is also provided. The apparatus includes:

an obtaining unit, configured to obtain a load of a cell; and
a parameter setting unit, configured to compare the load obtained by the obtaining unit with a preset threshold value, and set a channel power offset value of a user equipment in the cell according to a comparison result of comparing the obtained load of the cell with a preset threshold value.

A base station is also provided. The base station mainly includes the apparatus for setting a channel power offset described in the embodiment of the present invention and a power control unit, where

the power control unit is configured to control transmit power of a physical downlink shared channel of the cell according to a channel power offset value set by the parameter setting unit.

By using the method, the apparatus, and the base station provided in the embodiments of the present invention, the channel power offset value may be flexibly set according to a load state of the cell.

## BRIEF DESCRIPTION OF THE DRAWINGS

FIG. 1 is a flow chart of a method for setting a channel power offset according to an embodiment of the present invention;

FIG. 2 is a flow chart of a method for setting a channel power offset according to another embodiment of the present invention;

FIG. 3 is an experimental data diagram of implementing an energy consumption reduction after adopting an embodiment of the present invention;

FIG 4 is a flow chart of a method for setting a channel power offset according to another embodiment of the present invention;

FIG. 5 is a schematic structural diagram of an apparatus for setting a channel power offset according to an embodiment of the present invention;

FIG. 6 is a specific schematic structural diagram of an obtaining unit shown in FIG. 5; and

FIG. 7 is a schematic structural diagram of an embodiment of a base station according to the present invention.

**DETAILED DESCRIPTION OF THE EMBODIMENTS**

In order to make the objectives, technical solutions, and advantages of the present invention more clearly, the technical solutions provided in the present invention are further described in detail below with reference to the embodiments and the accompanying drawings.

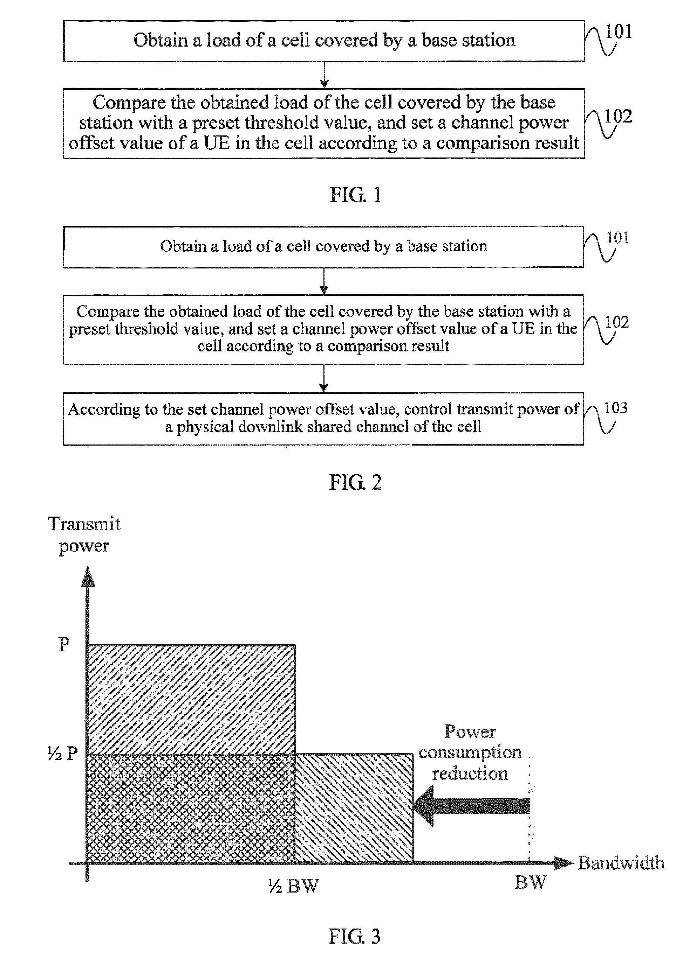

FIG. 1 is a flow chart of a method for setting a channel power offset according to an embodiment of the present invention. As shown in FIG 1, the method may include:

101: Obtain a load of a cell covered by a base station.

The load of the cell may be obtained by obtaining, in a preset time period, a resource block (Resource Block, abbreviated as RB) utilization ratio of the cell or a historical average traffic volume of the cell, where the preset time period may be set according to actual conditions and actual requirements, and may be, for example, a day or a week.

The historical average traffic volume is statistic information obtained by collecting statistics about a traffic volume of the cell in a preset time period. For example, after statistics collected in a week, it is known that the historical average tragic volume of a certain cell is less than 200 times/ha from 1:00 am to 4:00 am every day, which indicates that the load of the cell is light in the time period.

RB is the minimum transmission unit in an LTE system, and one RB may usually include 12 consecutive subcarriers. A subcarrier is the minimum frequency resource in the LTE system, and the bandwidth of a current subcarrier is usually 15 KHz, and a bandwidth allocated to a user equipment (User Equipment, abbreviated as UE) is an integral multiple of that of a resource block. Therefore, the bandwidth of the UE depends on the number of RBs.

The resource block utilization ratio is a key indicator for measuring a cell load, but a load of a cell is usually fluctuating. In order to reflect a long-term changing trend of the cell load, further, in the embodiment of the present invention, the following manner may be adopted to obtain the RB utilization ratio, so as to reflect the cell load more accurately: obtaining an RB utilization ratio of a cell, performing filtering processing on the obtained RB utilization ratio, and using a value obtained after the filtering processing as the obtained resource block utilization ratio of the cell to measure the load of the cell. Specifically, a manner for obtaining the resource block utilization ratio of the cell is described with reference to the following example.

An average value of an RB utilization ratio in each transmission time interval (Transmission Time Interval, abbreviated as TTI) is obtained in each time period of $T_{Cell\_RB}$ seconds. A TTI may be 2 ms, or 10 ms, or other values. In each TTI, the RB utilization ratio may be obtained by calculating a ratio of the number of used RBs to the total number of downlink RBs.

Filtering is performed on the obtained average value of the RB utilization ratio by adopting the following expression (1).

$$\eta_{cell\_RB}(i) = \alpha_{cell\_RB} \cdot \eta_{cell\_RB}(i-1) + (1 - \alpha_{cell\_RB}) \cdot \eta\ (i) \qquad (1)$$

In the expression, $\eta_{cell\_RB}(i)$ is a value obtained after filtering processing is performed on a cell average RB utilization ratio obtained in ith calculation, and is used to reflect the cell load. In the embodiment of the present invention, the filtering is performed by adopting an $\alpha$ filtering system, therefore, $\alpha_{cell\_RB}$ indicates a filtering coefficient, and $\eta\ (i)$ indicates the average value of the RB utilization ratio obtained in the ith calculation.

It should be noted here that, although the foregoing a filtering system is adopted in this embodiment, other filtering methods may also be adopted to filter out sharp short-term fluctuations in some TTIs.

102: Compare the obtained load of the cell covered by the base station with a preset threshold value, and set a channel power offset value of a UE in the cell according to a comparison result.

For example, when the obtained load of the cell is smaller than the preset threshold value, it indicates that the load of the cell is light at this time, and the channel power offset value of the UE in the cell may be decreased. When the obtained load of the cell is greater than the preset threshold value, the channel power offset value of the UE in the cell may be increased, for example, the channel power offset value is adjusted from a value smaller than 0 to 0.

Specifically, channel power offset values of all UEs in a cell may be set to a same value (that is, a cell level adjustment), or channel power offset values of part or all of UEs in the cell may be set according to priorities or transmit power requirements of user equipments (that is, a user level adjustment).

Furthermore, in the user level adjustment, different channel power offset values or a same channel power offset value may be set for different UEs. For example, according to priorities of UEs, a channel power offset value of a UE with a priority meeting a certain condition may be adjusted only, while an original channel power offset value of another UE remains unchanged. Or, according to priorities of UEs, different channel power offset values are set for UEs with different priorities, for example, when channel power offset values need to be decreased, because decreasing of a channel power offset value causes a throughput to decrease, a channel power offset value of a UE with a low priority may be decreased only, so that total energy consumption of the base station is reduced while deterioration of throughput performance of a UE with a high priority is avoided as far as possible. Or, according to transmit power requirements of UES, a channel power offset value of a UE with a transmit power requirement meeting a certain condition is adjusted only, and an original channel power offset value of another UE remains unchanged. Or, according to transmit power requirements of UEs, channel power offset values are set to different values according to different levels of power requirements. That is to say, differential processing may be implemented for setting of channel power offset values of users in the cell, so that total energy consumption of the base station is reduced while a requirement on throughput performance of a UE with a high priority may be met preferentially

The channel power offset value is a parameter set for a PDSCH of the cell and used to indicate transmit power used by the channel. In the LTE system, adaptive modulation and coding (Adaptive Modulation and Coding, abbreviated as AMC) is adopted for a time domain and a frequency domain, and an orthogonal frequency division multiplexing (Orthogonal Frequency Division Multiplexing, abbreviated as OFDM) technology is adopted for a downlink. Therefore, a physical resource of its downlink is defined according to an OFDM subcarrier and an OFDM symbol period, that is, a resource element (Resource Element, RE). A resource block may include 84 resource elements.

The PDSCH is a downlink channel on which data information is transmitted from a base station to a UE (User Equipment, abbreviated as UE) in the cell, and by controlling transmit power of the PDSCH, energy consumption of the base station may be adjusted. In related protocols of the LTE technology, it is stipulated that a value range of $P_A$ is [-6,-4.77,-3,-1.77,0,1,2,3], including eight values. In other systems, such as a high speed packet access system, the foregoing $P_A$ may also have other value ranges, which is not limited in the present invention.

In the method of this embodiment, a channel power offset value is set according to a load state of a cell, thereby achieving flexible setting and a dynamic adjustment of $P_A$.

FIG. 2 is a flow chart of a method for setting a channel power offset according to another embodiment of the present invention. As shown in FIG. 2, on the basis of the method shown in FIG. 1, the method according to the embodiment of the present invention further includes the following steps:

103: According to the set channel power offset value, control transmit power of a physical downlink shared channel of the cell.

Specifically, when a cell level adjustment is performed, transmit power of physical downlink shared channels of all user equipments in the cell is controlled to be a same value. When a user level adjustment is performed, transmit power of all or part of users in the cell is controlled, and specifically, transmit power of physical downlink shared channels of user equipments is controlled to be the same value or different values according to priorities or transmit power requirements.

In a downlink bandwidth of the PDSCH, power of a reference signal in a subframe is constant. Therefore, as long as $P_A$ is determined, the transmit power of the PDSCH is determined, and the greater the $P_A$ value is, the higher the transmit power is.

By setting the value of $P_A$, the base station is capable of reselecting different modulation and coding schemes (Modulation and Coding Scheme, abbreviated as MCS) for each adjusted UE, thereby changing the RB utilization ratio, and further changing consumption of power resources accordingly, so as to achieve a flexible adjustment of energy consumption.

According to one aspect, when the obtained load indicates that the cell load is light, the transmit power of the PDSCH may be reduced by setting a value of the channel power offset value $P_A$, so that idle RBs are used for data transmission as far as possible, thereby reducing the energy consumption.

According to another aspect, in the case that the cell load is heavy, that is, when the obtained load is greater than or equal to a preset threshold value, values of $P_A$ of all UEs in the cell may be set to 0 by adopting a uniform power allocation manner, that is, EPRE of reference signals is made to be the same as EPRE uniformly allocated to each RE of the downlink bandwidth from power of signals, excluding the RSs, in maximum transmit power of the eNB, thereby increasing a throughput of the cell.

Furthermore, it should be noted that, in an actual application, a base station may cover multiple cells. Similarly, the method in this embodiment may be adopted to obtain a cell load for each cell respectively, and then adjust power of each cell respectively.

For example, as shown in FIG. 3, an RB utilization ratio of a current cell is 50%, $P_A$ of all UEs is set to 0. After the adjustment, the value of $P_A$ is decreased to -3. It is assumed that an average MCS index number of each UE in the cell is decreased to 15. Then, the RB utilization ratio is increased to 50% to 100% in the case that an overall code rate of the UEs remains unchanged, which is equivalent to that a channel bandwidth (Band Width, abbreviated as BW) is increased by 50% to 100% compared with that before the adjustment, and at the same time energy consumption is decreased by 25%. It can be seen that, in the embodiment of the present invention., the reduction of power consumption is achieved at the cost of consumption of RB resources. However, the embodiment of the present invention is implemented only when the cell load is light. It is feasible and worthwhile to achieve the reduction of power consumption at the cost of consumption of RB resources because at this time, a lot of RB resources are surplus and in an idle state.

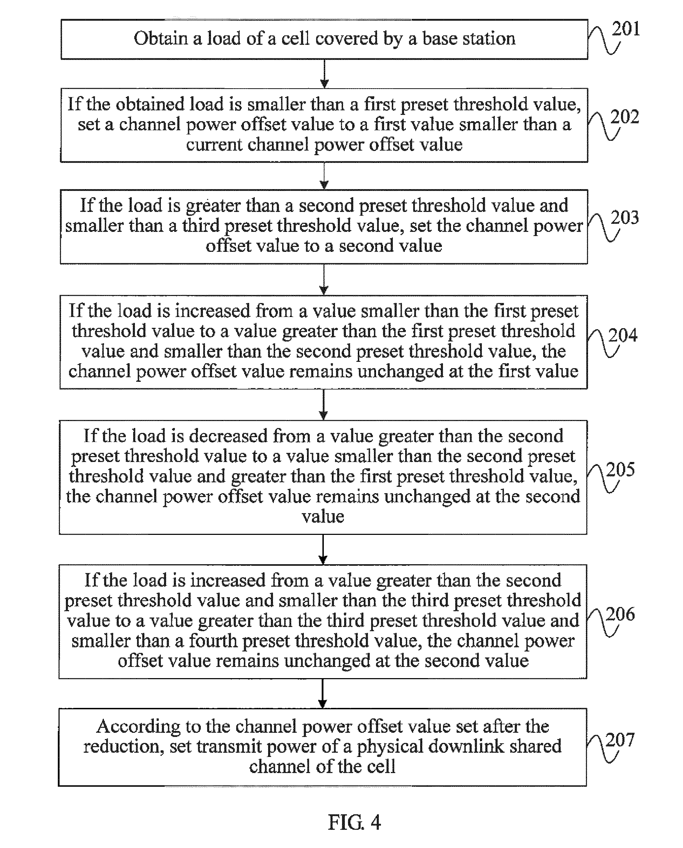

To avoid a ping-pong handover during setting the channel power offset, another embodiment of the present invention provides a method for setting a channel power offset. As shown in FIG 4, the method may include:

201: Obtain a load of a cell covered by a base station.

In this step, for a method for obtaining the load of the cell covered by the base station, reference may be made to related descriptions in the embodiment shown in FIG. 1, and details are not repeatedly described here.

202: If the obtained load is smaller than a first preset threshold value, set a channel power offset value to a first value.

For example, the load may be an RB utilization ratio, and it may be assumed that the first preset threshold value is 10%. When the RB utilization ratio is smaller than 10%, it indicates that the load of the cell is light at this time, and a value of the channel power offset value (that is, $P_A$) is set to -3 in the foregoing value range of $P_A$.

203: If the load is greater than a second preset threshold value and smaller than a third preset threshold value, set the channel power offset value to a second value.

For example, it is assumed that the second preset threshold value is 30%, the third preset threshold value is 50%. When the RB utilization ratio is greater than 30% and smaller than 50%, it indicates that the load of the cell is moderate at this time, and the value of $P_A$ is set to -1.77 in the foregoing value range of $P_A$, that is, the second value. The second value is greater than the first value.

204: If the load is increased from a value smaller than the first preset threshold value to a value greater than the first preset threshold value and smaller than the second preset threshold value, the channel power offset value remains unchanged at the first value.

205: If the load is decreased from a value greater than the second preset threshold value to a value smaller than the second preset threshold value and greater than the first preset threshold value, the channel power offset value remains unchanged at the second value.

206: If the load is increased from a value greater than the second preset threshold value and smaller than the third preset threshold value to a value greater than the third preset threshold and smaller than a fourth preset threshold value, the channel power offset value remains unchanged at the second value.

For example, it is assumed that the fourth preset threshold value is 70%. When the RB utilization ratio is constantly greater than 70%, it indicates that the load of the cell is heavy at this time, and the value of $P_A$ is not adjusted, so as to avoid that the RB utilization ratio further increases, and the load becomes heavier, and thereby affecting a processing capability for services.

If the RB utilization ratio increases from 50% to 60%, but does not exceed the fourth preset threshold value (70%), the value may remain unchanged at the second value. When the RB utilization ratio is greater than 70%, the value of $P_A$ may be adjusted to a value greater than the second value, for example, 0 or a value greater than 0.

In this embodiment, in each of the foregoing steps, the first preset threshold value < the second preset threshold value < the third preset threshold value < the fourth preset threshold value, and the first value < the second value.

207: According to the set channel power offset value, set transmit power of a physical downlink shared channel of the cell.

In the method described in this embodiment, when a range to which a value of a load belongs is judged, the second preset threshold value and the third preset threshold value are set, which can avoid chaotic setting of the $P_A$ value caused by a ping-pong decision phenomenon.

An example is taken for description below.

For example, when the cell load indicated by the utilization ratio is 5%, which is smaller than the first preset threshold value 10%, $P_A$ is set to -3. After that, if the RB utilization ratio increases, assuming that the RB utilization ratio turns to 20%, $P_A$ may remain unchanged at -3 at this time. The value of $P_A$ is not adjusted until the RB utilization ratio is greater than the second threshold value. In this manner, the chaotic setting of the $P_A$ value and the ping-pong decision phenomenon may be avoided. Similarly, when the cell load indicated by the utilization ratio is 35%, according to the foregoing methods of this embodiment, $P_A$ is set to -1.77. After that, if the RB utilization ratio decreases, assuming that the RB utilization ratio turns to 20%, $P_A$ may remain unchanged at -1.77 at this time, and the value of $P_A$ is not adjusted until the RB utilization ratio is smaller than the first threshold value.

It should be note that, in this embodiment, the first preset threshold, the present threshold, the third preset threshold, and the fourth preset threshold are taken as an example for description, to which the method according to the embodiment of the present invention is not limited actually, and values and the number of thresholds may also be set according to actual requirements.

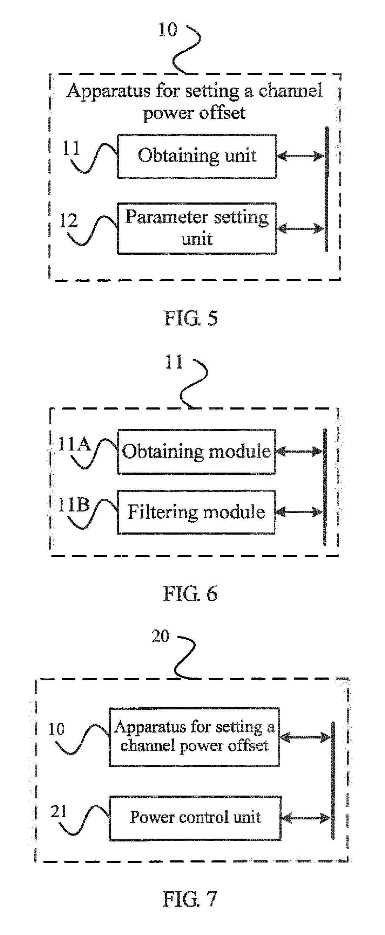

FIG. 5 is a schematic structural diagram of an apparatus for setting a channel power offset according to the present invention. An apparatus for setting a channel power offset 10 may include an obtaining unit 11 and a parameter setting unit 12.

The obtaining unit 11 obtains a load of a cell covered by a base station. The parameter setting unit 12 compares the load obtained by the obtaining unit 11 with a preset threshold value, and sets a value of a channel power offset value $P_A$ of a user equipment in the cell according to a comparison result. For example, when the obtained load of the cell is smaller than the preset threshold value, it indicates that the load of the cell is light at this time, and the channel power offset value of the UE in the cell may be decreased; when the obtained load of the cell is greater than the preset threshold value, the channel power offset value of the UE in the cell may be increased, for example, the channel power offset value is adjusted from a value smaller than 0 to 0. Specifically, the parameter setting unit 12 may set channel power offset values of all user equipments in the cell to a same value, so as to implement a cell level adjustment, or set channel power offset values of all or part of user equipments in the cell according to priorities or transmit power requirements of the user equipments in the cell, so as to implement a user level adjustment.

It should be noted that, for execution manners of each unit in the base station in this embodiment, reference may be made to corresponding descriptions in the method embodiments, and details are not repeatedly described here.

In this embodiment, the channel power offset value may be flexibly set according to a load state of the cell.

Furthermore, in order to avoid a ping-pong effect, multiple threshold values may be preset, for example, a first preset threshold value, a second preset threshold value, a third preset threshold value, and a fourth preset threshold value, where the first preset threshold value < the second preset threshold value < the third preset threshold value < the fourth preset threshold value, and a first value < a second value.

If the load obtained by the obtaining unit 11 is smaller the first preset threshold value, the channel power offset value is set to the first value smaller than a current channel power offset value; if the load is greater than the second preset threshold value and smaller than the third preset threshold value, the channel power offset value is set to the second value smaller than the current channel power offset value; if the load is increased from a value smaller than the first preset threshold value to a value greater than the first preset threshold value and smaller than the second preset threshold value, the channel power offset value remains unchanged at the first value; if the load is decreased from a value greater than the second preset threshold value to a value smaller than the second preset threshold value and greater than the first preset threshold value, the channel power offset value remains unchanged at the second value; if the load is increased from a value greater than the second preset threshold value and smaller than the third preset threshold value to a value greater than the third preset threshold value and smaller than the fourth preset threshold value, the channel power offset value remains unchanged at the second value.

A ping-pong decision phenomenon can be avoided by setting multiple threshold values, that is, a phenomenon of chaotic setting of the $P_A$ value during a decision process is avoided. For descriptions about avoiding the ping-pong decision phenomenon, reference may be made to the foregoing method embodiments, and details are not repeatedly described here.

It should be note that, in this embodiment, the first preset threshold value, the second preset threshold value, the third preset threshold value, and the fourth preset threshold value are taken as an example for description, to which the embodiment of the present invention is not limited actually, and values and the number of thresholds may also be set according to actual requirements.

Furthermore, the foregoing load may specifically be a resource block utilization ratio of the cell or a historical average traffic volume of the cell. When the resource block utilization ratio is obtained, as shown in FIG. 6, the obtaining unit 11 may specifically include an obtaining module 11A and a filtering module 11B.

When the resource block utilization ratio is obtained, first, the obtaining module 11A obtains the RB utilization ratio of the cell, and then the filtering module 11B performs filtering processing on the RB utilization ratio obtained by the obtaining module 11A to obtain a filtered value of the resource block utilization ratio which is used as the load. For a specific filtering method, reference may be made to the description about the expression (1) in the foregoing embodiment, and details are not repeatedly described here.

By performing the filtering processing on the initially-obtained resource block utilization ratio, errors caused by fluctuations of the cell load may be avoided, thereby deflecting a long-term changing trend of the cell load more accurately.

FIG. 7 is a schematic structural diagram of an embodiment of a base station according to the present invention. As shown in FIG. 7, a base station 20 includes the apparatus for setting a channel power offset 10 described in the embodiments shown in FIG. 5 to FIG. 6 of the present invention, and also includes a power control unit 21.

The power control unit 21 controls transmit power of a physical downlink shared channel of the cell according to a channel power offset value set by the apparatus for setting a channel power offset 10, specifically, when a cell level adjustment is performed, controls transmit power of physical downlink shared channels of all user equipments in the cell to be a same value, and when a user level adjustment is performed, only controls transmit power of a physical downlink shared channel of a user equipment with a low priority or a user equipment with a high transmit power requirement.

By setting a value of $P_A$, the base station according to this embodiment is capable of reselecting different MCSs for each adjusted UE, thereby changing the RB utilization ratio, and further changing consumption of power resources accordingly, thereby implementing a flexible adjustment of energy consumption.

Those of ordinary skill in the art should understand that all or part of the processes of the methods according to the foregoing embodiments may be implemented by a computer program instructing relevant hardware. The program may be stored in a computer readable storage medium. When the program is executed, the processes of the methods according to the foregoing embodiments may be included. The storage medium may be a magnetic disk, an optical disk, a read-only memory (Read-Only Memory, abbreviated as ROM), or a random access memory (Random Access Memory, abbreviated as RAM), and so on.

Finally, it should be noted that: The preceding embodiments are merely provided for describing the technical solutions of the present invention, but not intended to limit the present invention. Although the present invention is described in detail with reference to the foregoing embodiments, persons of ordinary skill in the art should understand that they may still make modifications to the technical solutions recorded in the foregoing embodiments, or equivalent replacements to part of technical features in the technical solutions; however, these modifications or replacements do not cause the nature of corresponding technical solutions to depart from the spirit and scope of the technical solutions in the embodiments of the present invention.

**Claims**

1. A method for setting a channel power offset, **characterized by** comprising:

   obtaining a load of a cell; and
   comparing an obtained load of the cell with a preset threshold value, and setting a channel power offset value of a user equipment in the cell according to a comparison result of comparing the obtained load of the cell with a preset threshold value.

2. The method for setting a channel power offset according to claim 1, further comprising:

   controlling transmit power of a physical downlink shared channel of the cell according to the channel power offset value.

3. The method for setting a channel power offset according to claim 1), wherein the obtaining the load of the cell comprises: obtaining, in a preset time period, a resource block utilization ratio of the cell or a historical average traffic volume of the cell.

4. The method for setting a channel power offset according to claim 3, wherein the obtaining the resource block utilization ratio of the cell further comprises:

   performing filtering processing on the resource block utilization ratio, and using a value obtained after the filtering processing as the resource block utilization ratio of the cell.

5. The method for setting a channel power offset according to claim 1, wherein the setting the channel power offset value of the user equipment in the cell according to the comparison result comprises:

   if the obtained load is smaller than a first preset threshold value, setting the channel power offset value to a first value; and
   if the obtained load is greater than a second preset threshold value and smaller than a third preset threshold value, setting the channel power offset value to a second value;
   wherein the first preset threshold value < the second preset threshold value < the third preset threshold value, and the first value < the second value.

6. The method for setting a channel power offset according to claim 5, wherein the setting the channel power offset value of the user equipment in the cell according to the comparison result further comprises:

> if the load is increased from a value smaller than the first preset threshold value to a value greater than the first preset threshold value and smaller than the second preset threshold value, maintaining the channel power offset value unchanged at the first value;
> if the load is decreased from a value greater than the second preset threshold value to a value smaller than the second preset threshold value and greater than the first preset threshold value, maintaining the channel power offset value unchanged at the second value; and
> if the load is increased from a value greater than the second preset threshold value and smaller than the third preset threshold value to a value greater than the third preset threshold value and smaller than a fourth preset threshold value, maintaining the channel power offset value unchanged at the second value;
> wherein the first preset threshold value < the second preset threshold value < the third preset threshold value < the fourth preset threshold value.

7. The method for setting a channel power offset according to any one of claims 1 to 6, wherein the setting the channel power offset value of the user equipment in the cell comprises:

> setting channel power offset values of all user equipments in the cell to a same value; or
> setting channel power offset values of all or part of the user equipments in the cell according to priorities or transmit power requirements of user equipments in the cell.

8. An apparatus for setting a channel power offset, **characterized by** comprising:

> an obtaining unit, configured to obtain a load of a cell; and
> a parameter setting unit, configured to compare the load obtained by the obtaining unit with a preset threshold value, and set a channel power offset value of a user equipment in the cell according to a comparison result of comparing the obtained load of the cell with a preset threshold value.

9. The apparatus for setting a channel power offset according to claim 8, wherein the cell load obtained by the obtaining unit comprises an obtained resource block utilization ratio of the cell or historical average traffic volume of the cell in a preset time period.

10. The apparatus for setting a channel power offset according to claim 9, wherein the obtaining unit comprises:

> an obtaining module, configured to obtain the resource block utilization ratio of the cell; and
> a filtering module, configured to perform filtering processing on the resource block utilization ratio obtained by the obtaining module, and use a value obtained after the filtering processing as the obtained resource block utilization ratio of the cell.

11. The apparatus for setting a channel power offset according to claim 8, wherein the parameter setting unit is configured to compare the load obtained by the obtaining unit with a preset threshold value; if the obtained load is smaller than a first preset threshold value, set the channel power offset value to a first value; and if the load is greater than a second preset threshold value and smaller than a third preset threshold value, set the channel power offset value to a second value;
wherein the first preset threshold value < the second preset threshold value < the third preset threshold value, and the first value < the second value.

12. The apparatus for setting a channel power offset according to claim 12, wherein the parameter setting unit is configured to: if the load is increased from a value smaller than the first preset threshold value to a value greater than the first preset threshold value and smaller than the second preset threshold value, maintain the channel power offset value unchanged at the first value; if the load is decreased from a value greater than the second preset threshold value to a value smaller than the second preset threshold value and greater than the first preset threshold value, maintain the channel power offset value unchanged at the second value; and if the load is increased from a value greater than the second preset threshold value and smaller than the third preset threshold value to a value greater than the third preset threshold value and smaller than a fourth preset threshold value, maintain the channel power offset value unchanged at the second value
wherein the first preset threshold value < the second preset threshold value < the third preset threshold value < the fourth preset threshold value, and the first value < the second value.

**13.** The apparatus for setting a channel power offset according to claim 8, wherein the parameter setting unit is configured to compare the load obtained by the obtaining unit with the preset threshold value, and according to the comparison result, set channel power offset values of all user equipments in the cell to a same value; or according to priorities or transmit power requirements af user equipments in the cell, set channel power offset values of all or part of the user equipments in the cell.

**14.** A base station, **characterized by** comprising the apparatus for setting a channel power offset according to any one of claims 8 to 13 and a power control unit;
wherein the power control unit is configured to control transmit power of a physical downlink shared channel of the cell according to a channel power offset value set by the apparatus for setting a channel power offset.

| Obtain a load of a cell covered by a base station | 101 |

| Compare the obtained load of the cell covered by the base station with a preset threshold value, and set a channel power offset value of a UE in the cell according to a comparison result | 102 |

FIG. 1

| Obtain a load of a cell covered by a base station | 101 |

| Compare the obtained load of the cell covered by the base station with a preset threshold value, and set a channel power offset value of a UE in the cell according to a comparison result | 102 |

| According to the set channel power offset value, control transmit power of a physical downlink shared channel of the cell | 103 |

FIG. 2

FIG. 3

Obtain a load of a cell covered by a base station 〔∿ 201

If the obtained load is smaller than a first preset threshold value, set a channel power offset value to a first value smaller than a current channel power offset value 〔∿ 202

If the load is greater than a second preset threshold value and smaller than a third preset threshold value, set the channel power offset value to a second value 〔∿ 203

If the load is increased from a value smaller than the first preset threshold value to a value greater than the first preset threshold value and smaller than the second preset threshold value, the channel power offset value remains unchanged at the first value 〔∿ 204

If the load is decreased from a value greater than the second preset threshold value to a value smaller than the second preset threshold value and greater than the first preset threshold value, the channel power offset value remains unchanged at the second value 〔∿ 205

If the load is increased from a value greater than the second preset threshold value and smaller than the third preset threshold value to a value greater than the third preset threshold value and smaller than a fourth preset threshold value, the channel power offset value remains unchanged at the second value 〔∿ 206

According to the channel power offset value set after the reduction, set transmit power of a physical downlink shared channel of the cell 〔∿ 207

FIG. 4

10

## Apparatus for setting a channel power offset

11 Obtaining unit

12 Parameter setting unit

FIG. 5

11

11A Obtaining module

11B Filtering module

FIG. 6

20

10 Apparatus for setting a channel power offset

21 Power control unit

FIG. 7

# INTERNATIONAL SEARCH REPORT

| | International application No. |
|---|---|
| | PCT/CN2010/079359 |

**A. CLASSIFICATION OF SUBJECT MATTER**

H04W 52/22(2009.01)i

According to International Patent Classification (IPC) or to both national classification and IPC

**B. FIELDS SEARCHED**

Minimum documentation searched (classification system followed by classification symbols)

IPC: H04W 52/-; H04W 88/-

Documentation searched other than minimum documentation to the extent that such documents are included in the fields searched

Electronic data base consulted during the international search (name of data base and, where practicable, search terms used)

CPRS;WPI;EPODOC;CNKI; channel power bias threshold value

**C. DOCUMENTS CONSIDERED TO BE RELEVANT**

| Category* | Citation of document, with indication, where appropriate, of the relevant passages | Relevant to claim No. |
|---|---|---|
| PX | CN101720123 A （HUAWEI TECHNOLOGIES CO LTD） 02 Jun.2010 （02.06.2010）Claims 1-14 | 1-14 |
| X | CN101437284 A （HUAWEI TECHNOLOGIES CO LTD） | 1-3,8-9,14 |
| A | 20 May 2009 （20.05.2009）description page 4-page10, Fig. 1, Fig. 2 | 4-7,10-13 |

☐ Further documents are listed in the continuation of Box C.          ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 22 Feb.2011 （22.02.2011） | **17 Mar. 2011 (17.03.2011)** |
| Name and mailing address of the ISA/CN The State Intellectual Property Office, the P.R.China 6 Xitucheng Rd., Jimen Bridge, Haidian District, Beijing, China 100088 Facsimile No. 86-10-62019451 | Authorized officer **HUANG Yuan** Telephone No. (86-10)62411769 |

Form PCT/ISA /210 (second sheet) (July 2009)

## INTERNATIONAL SEARCH REPORT
### Information on patent family members

| | International application No. |
|---|---|
| | PCT/CN2010/079359 |

| Patent Documents referred in the Report | Publication Date | Patent Family | Publication Date |
|---|---|---|---|
| CN101720123 A | 02.06.2010 | NONE | |
| CN101437284 A | 20.05.2009 | CN101437284 B | 11.08.2010 |

Form PCT/ISA /210 (patent family annex) (July 2009)

**REFERENCES CITED IN THE DESCRIPTION**

**Patent documents cited in the description**

- CN Z910224371